Europäisches Patentamt

European Patent Office

Office européen des brevets

(11) Publication number: **0 339 760**
**A1**

## EUROPEAN PATENT APPLICATION

(21) Application number: 89301402.7

(22) Date of filing: 15.02.89

(51) Int. Cl.⁴: **C08K 13/02** , //(C08K13/02, 3:22,3:22,5:02)

(30) Priority: 29.03.88 US 163637

(43) Date of publication of application:
02.11.89 Bulletin 89/44

(84) Designated Contracting States:
CH DE FR GB IT LI NL SE

(71) Applicant: **M&T CHEMICALS INC.**
**One Woodbridge Center**
**Woodbridge, NJ 07095(US)**

(72) Inventor: **Touval, Irving**
**72 East Shore Trail**
**Sparta, N.J. 07871(US)**

(74) Representative: **Paget, Hugh Charles Edward**
**et al**
**MEWBURN ELLIS & CO. 2/3 Cursitor Street**
**London EC4A 1BQ(GB)**

(54) **Flame retardant polymer compositions.**

(57) Flame retardant polymer compositions comprising:
   a) 15-40 wt. % of a thermoplastic polymer, preferably EVA;
   b) 20-40 wt. % of magnesium oxide or hydroxide to reduce flammability and smoking;
   c) 10-25 wt. % of aluminium oxide trihydrate or hydroxide as flame retardant filler;
   d) 10-20 wt. % of chlorinated paraffin hydrocarbon, e.g. 70% chlorinated wax, aiding processing; and
   e) 0-15 wt. % of antimony trioxide.

The compositions retain low flow on firing.

EP 0 339 760 A1

## FLAME RETARDANT POLYMER COMPOSITIONS

This invention relates to flame retardant polymer compositions, and, more particularly, to thermoplastic compositions which are capable of qualifying as a Class A material in the ASTM E84 tunnel test. In addition, the invention relates to flame retardant polymer compositions which can be processed on conventional blending and extruding equipment, while allowing retention of the advantageous physical and aesthetic properties of the host polymer.

Fillers, such as alumina trihydrate and magnesium hydroxide, have been used to impart flame retardancy to thermoplastics. However, these materials have many inherent disadvantages. When used in amounts required to pass the ASTM E84 tunnel test, they embrittle the plastic severely; furthermore, they can be used only with low melting thermoplastics.

Halogen-antimony systems are also effective flame retarders. However, they generate excessive black smoke and irritating fumes.

The applicants are aware of the following US patents setting out the state of the art: 4,006,114; 4,131,592; 4,225,318; 4,225,649 and 4,367,306.

In one aspect, therefore, the invention addresses the problem of providing flame retardant polymer compositions which are capable of qualifying as a Class A material in the ASTM E84 tunnel test, or a flame retardant polymer composition which has a flame spread rating of 25 or less and a smoke development rating of 450 or less, both ratings being given according to test results conducted in accordance with said ASTM E84 test.

Another aspect seeks to provide flame retardant polymer compositions which can be formulated effectively in conventional processing equipment.

It is preferred to be able to provide the aforementioned advantageous flame retardant polymer compositions in which desirable physical and aesthetic properties of the polymer component are substantially unaffected by the presence of the flame retardant materials in the composition, or at least not seriously adversely affected.

A further and important aspect addresses the problem of providing a flame retardant polymer formulation and product which includes selected components within predetermined compositional ranges which formulation will soften and char upon being fired, while remaining rigid without flowing, thereby retaining its structural integrity and preventing the structural material underneath the composition from burning.

Compositions providing solutions to various of these problems are described below.

Thus, in accordance with the invention, there is provided herein a flame retardant polymer composition having the following components in the defined amounts by weight of the composition.

| GENERAL FORMULATION | |
|---|---|
| INGREDIENT | PERCENT BY WEIGHT |
| Thermoplastic polymer | 15-40 |
| Magnesium hydroxide | 20-40 |
| Alumina trihydrate | 10-25 |
| Chlorinated paraffin hydrocarbon | 10-20 |
| Antimony trioxide | 0-15 |
| PREFERRED FORMULATION | |
| Ethyl vinylacetate | 24.2 |
| Magnesium hydroxide | 38.6 |
| Alumina trihydrate | 14.5 |
| 70% chlorinated paraffin wax | 15.2 |
| Antimony trioxide | 7.5 |
| TOTAL OF INGREDIENTS | 100.0 |

The flame retardant compositions preferably exhibit a flame spread rating of 25 or less and a smoke development rating of 450 or less, both ratings being determined under tunnel tests conducted according to ASTM E84. The composition of the invention are particularly useful for outside wall laminate structures where they approximate wallboard materials. They may thus be useful as core materials in outside-wall laminate structures with good flame spread and smoke development inhibition ratings.

Preparation may include dry-blending followed by heated extrusion.

PREFERRED FEATURES OF THE INVENTION

The polymer component of the flame retardant polymer composition of the invention suitably is a thermoplastic polymer, such as ethyl vinylacetate, a polyethylene, a polystyrene, polyester, PVC, or ethylene propylene rubber polymer.

A preferred thermoplastic polymer is an ethyl vinylacetate polymer, preferably having a melt index below 40, more preferably below 18, and most preferably below 9.

A suitable amount of the polymer component herein is about 15-40% by weight, preferably 20-30% by weight, and optimally about 25% by weight, of the composition.

The magnesium oxide or hydroxide component of the composition is present to decrease the flammability and reduce the amount of smoke generated upon ignition. Suitably, about 20-40% by weight of magnesium hydroxide is present in the composition.

The aluminium oxide trihydrate constituent suitably is present in an amount of about 10-25%, preferably 12% to 20%, and optimally about 15% by weight of the composition. Higher amounts of aluminium oxide trihydrate are not preferred because they cause dripping of the composition upon flaming.

Hydrotalcites, which are compounds of magnesium and aluminium hydroxides, may be used instead of the individual aluminium oxide trihydrate and magnesium oxide or hydroxide components. Therefore reference herein to the separate compounds may also refer to hydrotalcites.

The chlorinated paraffin hydrocarbon component of the composition of the invention suitably is present in an amount of about 10-20% by weight of the composition, and, optimally, about 15%. Such hydrocarbon compounds suitably contain about 40-80% chlorine, and, on average, have 18 to 36 carbon atoms. 70% chlorinated paraffin wax is suitable, for example.

The antimony trioxide component of the composition is present in an amount of about 0-15%, preferably 5% to 10%, and optimally about 7.5% by weight of the composition.

Comparative compositions and compositions embodying the invention were prepared by dry blending the components and fluxing the mixture in an extruder heated to about 285-400° C. The extrudate was then pelletized and pressed into 6 X 6 X 1/4" test squares at 325° F and 21,000 psi pressure. The flame resistance of the test squares was determined by placing the specimen on a 1" hexagonal wire mesh 1" above a Bunsen burner with a 5" blue flame at approximately 1900° F. The test is complete when the flame burns through the specimen, or after 10 minutes of heating has elapsed. Under these conditions, for example, ethyl vinylacetate polymer is consumed within 30 seconds and rigid PVC in 5 minutes. In contrast, tested compositions embodying the invention could withstand this flame treatment for over 10 minutes.

TABLE 1

| COMPOSITIONS | | | | | |
|---|---|---|---|---|---|
| Component | Weight, % | | | | |
| | 1 | 2 | 3 | 4 | 5 |
| EVA Resin | 24 | 24 | 24 | 24 | 24 |
| Al(OH)₃ Trihydrate | 54 | 39 | 26.5 | 14 | 0 |
| Mg(OH)₂ | 0 | 15 | 27.5 | 40 | 54 |
| 70% Cl Wax | 15 | 15 | 15 | 15 | 15 |
| Thermoguard CPA (Antimony Trioxide) | 7 | 7 | 7 | 7 | 7 |
| FLAME TEST RESULTS (SECONDS) | | | | | |
| Char Time | 32 | 35 | 32 | 30 | 30 |
| Sag Time | 50 | 95 | 150 | 280 | 140 |
| Drip | 155 | No | No | No | No |
| Burn Thru | Yes | No | No | No | No |
| Duration | 155 | 600 | 600 | 600 | 600 |
| Smoke | Black | White | White | White | White |
| Residual Flame | Yes | No | No | No | No |

These results show that Composition 4 has the best flame retardant properties. The compositions embodying the invention had better properties than the others tested.

The ASTM E84 tunnel test was carried out with the following results for Composition No. 4 above.

Flame spread rating - 20

Smoke development rating - 160

which values qualify the composition as a Class A material.

Test samples of ethyl vinylacetate (EVA) flame retardant composition also were prepared by injection moulding. The physical properties of the preferred inventive formulation, Composition 4 above, are given in comparison with EVA, itself.

| PHYSICAL PROPERTY | EVA | COMPOSITION 4 |
|---|---|---|
| Tensible Strength | 2800 | 2717 psi |
| Break Strength | 2800 | 2554 psi |
| Tensible Modulus | 2500 | 1190 |
| Elongation | 800 | 750 % |
| Notched Izod Imp | 28 | 3.5 ft-lbs./in. |

The ease with which the formulations described can be processed into powder mixtures or pellets is a consequence of the presence of the chlorinated paraffin component in the formulation which can be melted and absorbed onto the hydrated magnesia and alumina fillers. The resulting coating can then function as both a lubricant and compatibilizer between the fillers and polymer in the formulation. Since the chlorinated paraffin is readily absorbed onto the fillers, the compositions herein also do not exhibit the screw slippage normally associated with the temperatures used for preparing the compositions.

Exceptional flame retardancy is observed for the embodiments now described because the hydrogen chloride generated from the chlorinated paraffin reacts with the fillers. These reaction products apparently act as condensation catalysts Which promote heavy charring and cross-linking of the polymer. Thus, the resin itself does not generate flammable gases; instead non-volatile organics are formed. The small amounts of gases formed during flaming are rapidly rendered ineffective as fuel sources by the presence of water produced from the hydrated fillers and the reactive antimony trioxide.

The compositions, which generally have a density of about 1 5 g/m³, may be compressed into different shaped articles, e.g. pellets, coatings in wire jacketing, conduits; foams, laminate structures, e.g. between or on substrates, such as metals, wood and plastics.

4

**Claims**

1. Flame retardant composition comprising:
   a) about 15-40 wt. % of a thermoplastic polymer,
   b) about 20-40 wt. % of magnesium hydroxide or oxide,
   c) about 10-25 wt. % of alumina trihydrate or aluminium hydroxide,
   d) about 10-20 wt. % of a chlorinated paraffin hydrocarbon, and
   e) 0 wt. % to about 15 wt. % of antimony trioxide.

2. A composition according to claim 1 wherein:
   a) is ethyl vinylacetate, polyethylene, polystyrene, polyester, polyvinyl chloride, or ethylene-propylene rubber.

3. A composition according to claim 2 wherein:
   a) is ethyl vinylacetate.

4. A composition according to claim 3 wherein said ethyl vinylacetate has a melt index of less than 18.
5. A composition according to claim 3 wherein said ethyl vinylacetate has a melt index of less than 9.
6. A composition according to any of claims 1 to 5 which has a flame spread rating of 25 or less and a smoke development rating of 450 or less, as measured by the ASTM E84 tunnel test.
7. A composition according to claim 1 which comprises:
   a) about 24.2 wt. % of ethyl vinylacetate,
   b) about 38.6 wt.% of magnesium hydroxide,
   c) about 14.5 wt. % of alumina trihydrate,
   d) about 15.2 wt. % of 70% chlorinated paraffin wax, and
   e) about 7.5 wt. % of antimony trioxide.

8. A fire retardant article consisting of or comprising a composition according to any one of the preceding claims.
9. A method of making a fire retardant article, comprising dry-blending of components (a) to (e) followed by heated extrusion to form a composition according to any one of claims 1 to 7.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | PATENT ABSTRACTS OF JAPAN, vol. 7, no. 235 (C-191)[1380], 19th October 1983; & JP-A-58 129 026 (UBE KOSAN K.K.) 01-08-1983 * Abstract * --- | 1-6 | C 08 K 13/02 // (C 08 K 13/02 C 08 K 3:22 C 08 K 3:22 C 08 K 5:02 ) |
| A | EP-A-0 212 825 (NIPPON PETROCHEMICALS LTD) * Claim 1 * ----- | 1 | |

TECHNICAL FIELDS
SEARCHED (Int. Cl.4)

C 08 K
C 08 L

The present search report has been drawn up for all claims

| Place of search | Date of completion of the search | Examiner |
|---|---|---|
| THE HAGUE | 07-07-1989 | SCHUELER D.H.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P0401)